# EUROPÄISCHE PATENTSCHRIFT

(11) **EP 3 061 221 B1**
(45) Veröffentlichungstag und Bekanntmachung des Hinweises auf die Patenterteilung: **31.07.2019**
(21) Anmeldenummer: 14786609.9
(22) Anmeldetag: 17.10.2014
(51) Int. Cl.: H04L 29/06

(54) **VERFAHREN ZUR TELEKOMMUNIKATION UND KOMMUNIKATIONSENDGERÄT**
TELECOMMUNICATION METHOD AND CORRESPONDING APPARATUS
PROCÉDÉ DE TÉLÉCOMMUNICATION ET DISPOSITIF CORRESPONDANT

(30) Priorität: 25.10.2013 DE 102013017790
(43) Veröffentlichungstag der Anmeldung: 31.08.2016
(73) Patentinhaber: Unify GmbH & Co. KG, 80807 München (DE)
(72) Erfinder: HORVATH, Ernst, A-1060 Wien (AT)
(74) Vertreter: Fritzsche, Thomas
(86) Internationale Anmeldenummer: PCT/EP2014/002804
(87) Internationale Veröffentlichungsnummer: WO 2015/058845

(56) Entgegenhaltungen:
- CN-A- 101 035 114
- US-A1- 2007 100 981
- US-A1- 2010 111 101
- Mikka Poikselkä ET AL: "THE IMS: IP Multimedia Concepts and Services, 3rd edition", IMS IP Multimedia Concepts and Services, 1. Januar 2009 (2009-01-01), XP055158736, Chichester, GB ISBN: 978-0-47-072196-4 Gefunden im Internet: URL:http://proquest.safaribooksonline.com/ book/networking/ip/9780470721964/chapter-1 2-an-example-ims-multimedia-telephony-sess ion/navpoint-106#X2ludGVybmFsX0J2ZGVwRmxhc 2hSZWFkZXI/eG1saWQ9OTc4MDQ3MDcyMTk2NC8zMzc = [gefunden am 2014-12-15]
- Anonymous: "Customer-premises equipment - Wikipedia", , 17 October 2013 (2013-10-17), XP055457499, Retrieved from the Internet: URL:https://en.wikipedia.org/w/index.php?t itle=Customer-premises_equipment&oldid=577 629959 [retrieved on 2018-03-08]

## Beschreibung

Die Erfindung betrifft ein Verfahren zur Telekommunikation, wobei eine mittels des von einem SIP-Server bereitgestellten Session Initiation Protokolls (SIP) eingeleitete und kontrollierte Kommunikationsverbindung von und/oder zu einem Kommunikationsendgerät aufgebaut wird. Die Erfindung betrifft weiter ein Kommunikationsendgerät, das dazu eingerichtet ist, dass eine mittels des von einem SIP-Server bereitgestellten Session Initiation Protokolls (SIP) eingeleitete und kontrollierte Kommunikationsverbindung von und/oder zu dem Kommunikationsendgerät aufbaubar ist.

Bei einer mittels des Session Initiation Protokolls (SIP) eingeleiteten und kontrollierten Kommunikationsverbindung, beispielsweise einer Telefonverbindung, kann es notwendig oder wünschenswert sein, bestimmte Zusatzfunktionen aufzurufen, die üblicherweise von dafür ausgerüsteten Servern oder Netzkomponenten bereitgestellt werden. Das Session Initiation Protokoll bietet nur für ausgewählte Anwendungsfälle, beispielsweise zum Abholen von Standortkoordinaten von einem Server, entsprechende Protokollelemente an, im genannten Beispiel ein Header-Feld mit einer Universal Resource Identifier (URI) zum Abholen der Standortkoordinaten mittels HTTP-Protokoll. Das SIP-Protokoll bietet jedoch keine standardisierte Möglichkeit, vorgebbare Funktionen unmittelbar mittels SIP aufzurufen, unabhängig davon, ob SIP-Komponenten an einem SIP-Dialog beteiligt sind oder nicht. Das Aufrufen, anders ausgedrückt Ansprechen, einer Funktion einer an der Kommunikationsverbindung beteiligten SIP-Komponente, sei es im Rahmen des bestehenden SIP-Dialogs oder außerhalb dieses Dialogs, ist im SIP-Standard nicht vorgesehen.

Ein typischer Anwendungsfall ist ein Aufruf einer Malicious Call Identification (MCID), welche auch noch kurz nach dem Abbau der Kommunikationsverbindung, beispielsweise dem Auslösen des Rufes, durch den Anrufer, abgesetzt werden kann. Hierfür verzögert das an der Kommunikationsverbindung bzw. dem Ruf beteiligte Gateway die Kommunikationsverbindung-bzw. Rufabbauprozedur in Richtung öffentliches Netz, während im Firmennetz die belegten Ressourcen möglichst unmittelbar nach Beenden des SIP-Dialogs freigegeben werden sollten. Hieraus ergibt sich jedoch das Problem, den MCID-Aufruf zum richtigen Gateway zu leiten und dort mit der zugehörigen Kommunikationsverbindung zu verknüpfen. Bei bekannten Verfahren zur Telekommunikation und entsprechenden Kommunikationsendgeräten ist ein gezieltes dynamisches Ansprechen der gewünschten Funktion, wie dem MCID-Aufruf, nicht möglich, ebenso wenig ein Ansprechen der gewünschten Funktion außerhalb eines bestehenden SIP-Dialogs.

Die Publikation Mikka Poikselkä et al.: "IP Multimedia Concepts and Services, 3rd edition" IMS IP Multimedia Concepts and Services, 1. Januar 2009, XP055158736, Chichester, GB; ISBN: 987-047-072196-4, Seiten 22-26, 337-383, beschreibt Konzepte und Services des IP Multimedia Subsystems (IMS).

Zur Erleichterung eines Weiterleitens innerhalb eines Dialoges werden SIP Routing Mechanismen verwendet, d.h. alle Serving Call Session Control Functions (S-CSCFs) legen Ihre Adressen in einem Via Header ab, so dass alle Antworten zu INVITE Anfragen über dieselbe Route wie die Anfrage selbst zurückgeschickt werden können. Wenn nachfolgende Anfragen ausgesendet werden, beinhalten die UEs eine Liste an Routeneinträgen, welche die Anfrage zwingt einer bestimmten Route zu folgen.

US 2007/0100 981 A1 betrifft eine Anwendungsservice-Infrastruktur für Netzwerke, welche mindestens ein IMS umfasst. Ein SIP Dialog mit einer SIP Nachricht (INVITE) wird gestartet und von einem zu einem anderen Endgerät verfolgt. Nachfolgende Dialoge, welche mit dem anfänglichen in Beziehung stehen, können gestartet werden, wobei die vermittelnden Komponenten in dem Signalpfad verbleiben können, sofern sie Header Informationen zu der anfänglichen SIP Nachricht hinzugefügt haben.

Wikipedia "Customer-premises equipment", 17. Oktober 2013, XP055457499, [gefunden am 8.März 2018 im Internet] URL: https://en.wikipedia.org/w/index.php?title=Customer-premises_equipment&oldid=577629959 beschreibt das Prinzip von kundeneigenen Geräten oder vom Kunden zur Verfügung gestellten Geräten (CPE), die sich als beliebige Endgeräte in den Räumlichkeiten eines Teilnehmers befinden und mit dem Telekommunikationskanal eines Betreibers über einen Demarkationspunkt verbunden sind.

US 2010/0111101 A1 offenbart ein Bereitstellungsverfahren zum Verwalten von Mediendaten auf einer Plattform für den Zugriff, auf die während einer Mediensitzung von einem Benutzer zugegriffen und abgerufen werden können. Demgegenüber stellt sich die Erfindung die Aufgabe, die Ansteuerung von SIP-Server-Funktionen in Verbindung mit einer mittels des SIP-Protokolls gesteuerten Kommunikationsverbindung, flexibel und auf einfache Weise zu ermöglichen.

Diese Aufgabe wird gelöst durch ein Verfahren zur Telekommunikation mit den Merkmalen des Patentanspruchs 1 in seiner Gesamtheit. Weiter wird die Aufgabe gelöst durch ein Kommunikationsendgerät mit den Merkmalen des Patentanspruchs 7 in seiner Gesamtheit. Erfindungsgemäß wird ausgelöst bzw. auslösbar durch das Kommunikationsendgerät eine Funktionsadresse zum Aufruf mindestens einer der jeweiligen Kommunikationsverbindung zuordenbaren, zumindest temporär verfügbaren Funktion des SIP-Servers in Form eines SIP-Protokollelements dynamisch generiert, wobei das SIP-Protokollelement als Zieladresse einer SIP-Nachricht an den SIP-Server zum Aufruf der Funktion dient. Die dynamische Generierung des SIP-Protokollelements erfolgt dabei durch ein Gateway, welcher die jeweilige Funktion anbietet, wobei das gerufene Kommunikationsendgerät die jeweilige Funktion des Gateways aufruft.

Dabei wird die Kommunikationsverbindung über das Gateway aufgebaut, welches die Funktionsadresse generiert, wobei die an dem Gateway generierte Funktionsadresse die Gateway-Adresse und/oder eine Kennung für die aufzubauende Kommunikationsverbindung umfasst und wobei das temporär generierte SIP-Protokollelement als Malicious Call Identification "MCID" - Aufruf zum Aufruf der Funktion von dem gerufenen Kommunikationsendgerät an das Gateway geschickt wird.

Erfindungsgemäß ist vorgesehen, dass für eine gewünschte Funktion eine Zieladresse in Form eines SIP-Protokollelements dynamisch generiert wird. Erfindungsgemäß werden dynamische SIP-Adressen zur Funktionsansteuerung bei SIP-Kommunikationsverbindungen eingesetzt. Auf diese Weise wird eine rückwärtskompatible Erweiterung der SIP-Signalisierung, insbesondere des Dialogmodells, erreicht und zum gezielten Steuern von SIP-Nachrichten an diese Funktionsadressen, unter Beibehaltung der übrigen Dialogeigenschaften, eingesetzt.

Die sich hieraus ergebenden Vorteile sind das punktgenaue Ansteuern von Funktionen und ein hohes Maß an Effizienz durch Einbettung der Funktionskontrolle in einen bestehenden SIP-Dialog. So kann die Notwendigkeit eines Zweitrufes, auch Consultation Call genannt, beispielsweise zum Zweck der Aktivierung eines Leistungsmerkmals entfallen. Insgesamt wird eine erweiterte, in vereinfachter Weise steuerbare Telekommunikation mittels SIP erreicht.

Die erfindungsgemäße Ausgestaltung des Verfahrens zur Telekommunikation bzw. des entsprechenden Kommunikationsendgeräts ermöglicht neben einem dynamischen und damit flexiblen Ansprechen einer gewünschten Funktion ein Aufruf der Funktion nicht nur innerhalb des SIP-Dialogs während einer aufgebauten Kommunikationsverbindung, sondern auch außerhalb des SIP-Dialogs nach Abbau der Kommunikationsverbindung. Insbesondere können Funktionen unmittelbar mittels SIP aufgerufen werden. Die vorstehend aufgeführten Vorteile werden erfindungsgemäß mit minimalem Aufwand, also auf einfache Weise, erreicht.

Typischerweise wird das SIP-Protokollelement als Session Initiation Protokoll-Universal Resource Identifier (SIP-URI) ausgebildet. Die dynamische Generierung des SIP-Protokollelements erfolgt entweder durch den SIP-Server, welcher die jeweilige Funktion anbietet, oder durch das Kommunikationsendgerät, welches die jeweilige Funktion aufruft. Die Kommunikationsverbindung wird bevorzugterweise über den SIP-Server und/oder ein Gateway aufgebaut, wobei der SIP-Server und/oder das Gateway die Funktionsadresse generiert. Alternativ kann das Kommunikationsendgerät die Funktionsadresse generieren. In beiden Ausgestaltungen der Erfindung dient das dynamische SIP-Protokollelement als Zieladresse einer SIP-Nachricht zum Aufrufen der entsprechenden Funktion, insbesondere ist die dynamische SIP-URI als SIP-Element Request-URI ausgestaltet.

Besonders bevorzugt umfasst die an dem Gateway generierte Funktionsadresse die Gateway-Adresse und/oder eine Kennung für die aufzubauende Kommunikationsverbindung. Die an dem SIP-Server generierte SIP-URI wird vorteilhafterweise in die SIP-Signalisierung eingefügt. Unabhängig von der Stelle der Erzeugung bzw. Generierung werden die zumindest temporär verfügbare Funktion und die damit verfügbaren Features bekanntgegeben.

Die Bekanntgabe des dynamischen SIP-Protokollelements erfolgt bevorzugterweise mittels zusätzlicher Elemente in einer INVITE- oder Antwort-Nachricht, anders ausgedrückt wird die Funktionsadresse vorzugsweise in eine INVITE- oder Antwort-Nachricht integriert. Es versteht sich jedoch, dass das erfindungsgemäß dynamisch generierte SIP-Protokollelement nicht auf Komponenten beschränkt ist, welche direkt im Signalisierungspfad liegen.

Beispielsweise fügt ein Gateway für eine aufzubauende Kommunikationsverbindung, wie einen Ruf, seine Adresse und seine Call-ID in die ursprüngliche INVITE-Nachricht ein. Dieses Signal, anders ausgedrückt diese Information, versetzt das angerufene Kommunikationsendgerät in die Lage, auch nach Abbau bzw. Ende der Kommunikationsverbindung für einen vorgegebenen Zeitraum rufbezogene Daten, wie eine Malicious Call Identification (MCID), direkt vom Gateway abzurufen, obwohl nach Abbau der Kommunikationsverbindung die zugehörigen Ressourcen im Netz bereits wieder freigegeben sind. Dieses Beispiel veranschaulicht, dass die Erfindung eine rückwärtskompatible Erweiterung des SIP-Dialogmodells ermöglicht sowie ein gezieltes Lenken von SIP-Nachrichten an Funktionsadressen.

In einer bevorzugten Variante des erfindungsgemäßen Verfahrens wird die Funktionsadresse zu einem Zeitpunkt aufgerufen, der in einen Zeitraum fällt, der die Dauer der aufgebauten Kommunikationsverbindung und einen weiteren Zeitraum nach Abbau der aufgebauten Kommunikationsverbindung umfasst. Weiter ist es vorteilhaft, dass die dynamisch generierte Funktionsadresse nach einem vorgegebenen Ereignis, insbesondere nach dem Aufruf der Funktion, und/oder nach Ablauf einer bestimmten Zeitdauer gelöscht wird.

Die Aufgabe der vorliegenden Erfindung wird durch das Kommunikationsendgerät gemäß Anspruch 7 aus denselben Gründen gelöst, wie diese weiter oben für das entsprechende Verfahren angegeben wurden.

Die Erfindung umfasst weiter ein Computerprogrammprodukt gemäß Anspruch 6 zur Ausführung des erfindungsgemäßen Verfahrens. Weitere Vorteile und Merkmale der Erfindung ergeben sich aus den Figuren und der nachfolgenden Beschreibung der Zeichnung. Die in den Figuren gezeigten Merkmale sind rein schematisch und nicht maßstäblich zu verstehen. Die vorstehend genannten und die weiter aufgeführten Merkmale können erfindungsgemäß jeweils einzeln oder in beliebigen Kombinationen in einem erfindungsgemäßen Verfahren, einem erfindungsgemäßen Computerprogrammprodukt oder einem erfindungsgemäßen Kommunikationsendgerät realisiert sein. Es zeigt:
- Fig. 1: ein Kommunikationssystem zum Aufbau einer Kommunikationsverbindung und zur Durchführung des erfindungsgemäßen Verfahrens; und
- Fig. 2: ein das Prinzip des Aufbaus und der Durchführung des erfindungsgemäßen Verfahrens erläuterndes weiteres Kommunikationssystem.

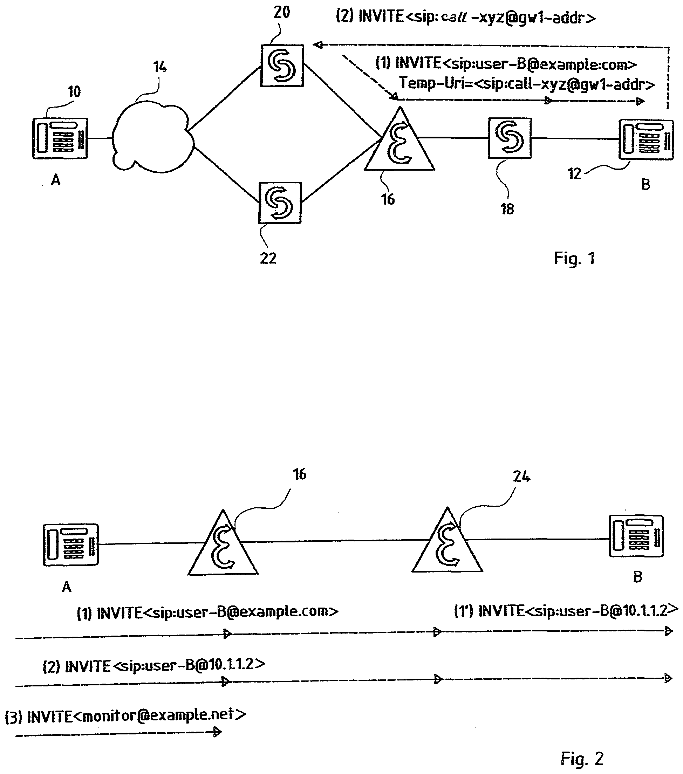

Fig. 1 zeigt, wie eine Kommunikationsverbindung von einer ersten Kommunikationsstelle A zu einer zweiten Kommunikationsstelle B aufgebaut werden kann. An der ersten Kommunikationsstelle A ist ein Kommunikationsendgerät 10, an der zweiten Kommunikationsstelle B ein weiteres erfindungsgemäßes Kommunikationsendgerät 12 angeordnet. Zwischen den beiden Kommunikationsstellen A, B bzw. Kommunikationsendgeräten 10, 12 sind ein Serviceprovider 14, ein SIP-Server 16 und ein Proxyserver 18 angeordnet. Des Weiteren sind zwischen dem Serviceprovider 14 und dem SIP-Server 16 ein erstes Gateway 20 und parallel zu diesem ein zweites Gateway 22 angeordnet.

Beim Aufbau einer Kommunikationsverbindung von der ersten Kommunikationsstelle A zur zweiten Kommunikationsstelle B erzeugt das erste Gateway 20, bei dem der externe Ruf ankommt, ein dynamisches SIP-Protokollelement, hier eine SIP-URI, welche sowohl die Gateway-Adresse, als auch eine Kennung für den ankommenden Ruf enthält, und inkludiert diese SIP-URI in dem beispielhaft dargestellten Element einer SIP-INVITE-Nachricht (1) in Richtung der zweiten Kommunikationsstelle B als Rufziel.

Das temporär generierte SIP-Protokollelement ist für einen eventuellen MCID-Aufruf vorgesehen, der beispielsweise in Form einer zweiten INVITE-Nachricht (2) vom gerufenen Teilnehmer, hier dem weiteren Kommunikationsendgerät 12, aus an das erste Gateway 20 geschickt werden kann. Der MCID-Aufruf mittels der zweiten INVITE-Nachricht (2) vom weiteren Kommunikationsendgerät 12 zum ersten Gateway 20 kann aufgrund der in dieser enthaltenen Kennung eindeutig die Kommunikationsverbindung zwischen den Kommunikationsstellen A, B zugeordnet werden.

Dies kann sowohl während der aufgebauten Kommunikationsverbindung als auch zumindest einem vorgegebenen Zeitraum nach dem Beenden der Kommunikationsverbindung durch das erste Kommunikationsendgerät 10, anders ausgedrückt nach Abbau des ursprünglichen SIP-Dialogs, durchgeführt werden. Das erste Gateway 20 verwirft die dynamische SIP-URI, sobald ein MCID-Aufruf erfolgte oder kein solcher Aufruf mehr möglich ist, beispielsweise nach dem vorgegebenen Zeitraum.

Fig. 2 veranschaulicht, wie in einem weiteren Kommunikationssystem eine Kommunikationsverbindung und ein zugehöriger SIP-Dialog von der ersten Kommunikationsstelle A zur zweiten Kommunikationsstelle B aufgebaut werden kann. Zwischen den beiden Kommunikationsstellen A, B ist der SIP-Server 16 und ein weiterer SIP-Server 24 angeordnet. Die Server 16 und 24 können Domänennamen aufweisen. Beispielsweise trägt der Server 16 den Domänennamen "example.net" und der Server 24 trägt den Domänennamen "example.com". In dem in Fig. 2 gezeigten Ausführungsbeispiel können im Rahmen einer bestehenden Kommunikationsverbindung gezielt Funktionen aufgerufen werden, ohne den Signalisierungspfad des zur Kommunikationsverbindung gehörenden SIP-Dialogs verlassen zu müssen.

Hierfür trägt das der ersten Kommunikationsstelle A zugeordnete Kommunikationsendgerät anstatt der gemäß SIP-Standard üblichen Kontaktadresse für Aufrufe innerhalb des SIP-Dialogs ein SIP-Protokollelement, hier eine SIP-URI für die gewünschte Funktion als Zieladresse, hier ein SIP Element Request-URI, ein, wobei die übrigen Nachrichtenelemente unverändert bleiben. Ein derart ausgestalteter SIP-Aufruf (3) kann beim SIP-Server 16 enden, welcher die Funktions-URI erkennt und die gewünschte Funktion, beispielsweise das Leistungsmerkmal "Monitor", ausführt.

Die in Fig. 2 exemplarisch dargestellten INVITE-Nachrichten veranschaulichen, dass normale Anrufe (1), (2) innerhalb des dargestellten SIP-Dialogs zwischen den beiden Kommunikationsstellen A, B bis zur Kontaktadresse der zweiten Kommunikationsstelle B durchgeleitet werden, wohingehend ein Monitor-Aufruf (3) beim SIP-Server 16 endet, obwohl er den bestehenden SIP-Dialog nutzt.

Die unter Bezug auf die dargestellten Ausführungsformen beschriebenen Merkmale der Erfindung, z.B. die dynamische SIP-URI, die sowohl die Gateway-Adresse, als auch eine Kennung für den ankommenden Ruf enthält, und inkludiert ist in dem in Fig. 1 dargestellten Element einer SIP-INVITE-Nachricht (1), können auch bei anderen Ausführungsformen der Erfindung vorhanden sein, z.B. die SIP-URI gemäß Fig. 1 anstelle des SIP Elements Request-URI in dem in der Fig. 2 dargestellten Ausführungsbeispiel, außer wenn es anders angegeben ist oder sich aus technischen Gründen von selbst verbietet.

### Bezugszeichenliste

- 10: Kommunikationsendgerät
- 12: weiteres Kommunikationsendgerät
- 14: Service Provider
- 16: SIP - Server
- 18: Proxy - Server
- 20: erstes Gateway
- 22: zweites Gateway
- 24: weiterer SIP - Server

- A: erste Kommunikationsstelle
- B: zweite Kommunikationsstelle

## Patentansprüche

1. Verfahren zur Telekommunikation,
- wobei eine mittels des von einem SIP-Server (16, 24) bereitgestellten Session Initiation Protokolls, SIP, eingeleitete und kontrollierte Kommunikationsverbindung von und/oder zu einem Kommunikationsendgerät (10, 12) aufgebaut wird,
- wobei ausgelöst durch das Kommunikationsendgerät (10, 12) eine Funktionsadresse zum Aufruf mindestens einer der jeweiligen Kommunikationsverbindung zuordenbaren, zumindest temporär verfügbaren Funktion des SIP-Servers (16, 24) in Form eines SIP-Protokollelements dynamisch generiert wird,
- wobei das SIP-Protokollelement als Zieladresse einer SIP-Nachricht an den SIP-Server (16, 24) zum Aufruf der Funktion dient und
- wobei die dynamische Generierung des SIP-Protokollelements durch ein Gateway (20, 22) erfolgt, welches
die jeweilige Funktion anbietet,
• wobei das gerufene Kommunikationsendgerät der jeweiligen Kommunikationsverbindung (B, 12) die jeweilige Funktion des Gateways (20, 22) aufruft,
• wobei die Kommunikationsverbindung über das Gateway (20, 22) aufgebaut wird, welches die Funktionsadresse generiert, wobei die an dem Gateway generierte Funktionsadresse die Gateway-Adresse und/oder eine Kennung für die aufzubauende Kommunikationsverbindung umfasst, und
• wobei das temporär generierte SIP-Protokollelement als Malicious Call Identification "MCID" - Aufruf von dem gerufenen Kommunikationsendgerät (B, 12) zum Aufruf der jeweiligen Funktion an das Gateway (20, 22) geschickt wird.

2. Verfahren nach Anspruch 1, wobei das SIP-Protokollelement als Session Initiation Protokoll-Universal Resource Identifier, SIP-URI, ausgebildet wird.

3. Verfahren nach einem der vorhergehenden Ansprüche, wobei die Funktionsadresse in eine INVITE- oder Antwort-Nachricht integriert wird.

4. Verfahren nach einem der vorhergehenden Ansprüche, wobei die Funktion durch die Funktionsadresse zu einem Zeitpunkt aufgerufen wird, der in einen Zeitraum fällt, der die Dauer der aufgebauten Kommunikationsverbindung und einen weiteren Zeitraum nach Abbau der aufgebauten Kommunikationsverbindung umfasst.

5. Verfahren nach einem der vorhergehenden Ansprüche, wobei die dynamisch generierte Funktionsadresse nach einem vorgegebenen Ereignis, insbesondere nach dem Aufruf der Funktion, und/oder nach Ablauf einer bestimmten Zeitdauer gelöscht wird.

6. Ein Computerprogrammprodukt zur Ausführung des Verfahrens nach einem der Ansprüche 1 bis 5.

7. Kommunikationsendgerät (A, 10, B, 12), das dazu eingerichtet ist, eine mittels des von einem SIP-Server (16, 24) bereitgestellten Session Initiation Protokolls SIP, eingeleitete und kontrollierte Kommunikationsverbindung von und/oder zu dem Kommunikationsendgerät (A, 10, B, 12) aufzubauen,
- wobei
das Kommunikationsendgerät (A, 10, B, 12) weiter eingerichtet ist, eine Funktionsadresse zum Aufruf mindestens einer der jeweiligen Kommunikationsverbindung zuordenbaren, zumindest temporär verfügbaren Funktion des SIP-Servers (16, 24) auszulösen,
- wobei die Funktionsadresse in Form eines SIP-Protokollelements dynamisch generiert wird, das als Zieladresse einer SIP-Nachricht an den SIP-Server (16, 24) zum Aufruf der Funktion dient und
- wobei die dynamische Generierung des SIP-Protokollelements durch ein Gateway (20, 22) erfolgt, welches
die jeweilige Funktion anbietet,
• wobei das Kommunikationsendgerät als gerufenes Kommunikationsendgerät der Kommunikationsverbindung (B, 12) dazu eingerichtet ist, die jeweilige Funktion des Gateways (20, 22) aufzurufen,
• wobei die Kommunikationsverbindung über das Gateway (20, 22) aufgebaut wird, welches die Funktionsadresse generiert, wobei die an dem Gateway generierte Funktionsadresse die Gateway-Adresse und/oder eine Kennung für die aufzubauende Kommunikationsverbindung umfasst, und
• wobei das Kommunikationsendgerät als gerufenes Kommunikationsendgerät zudem dazu eingerichtet ist, das temporär generierte SIP-Protokollelement als Malicious Call Identification "MCID" - Aufruf (B, 12) zum Aufruf der jeweiligen Funktion an das Gateway (20, 22) zu schicken.

8. Kommunikationsendgerät (A, 10, B, 12) nach Anspruch 7, dass das Kommunikationsendgerät weiter eingerichtet ist, dass das SIP-Protokollelement als Session Initiation Protokoll-Universal Resource Identifier, SIP-URI, ausgebildet ist.

## Claims

1. A telecommunication method,
- wherein a communication connection, initiated and controlled by the Session Initiation Protocol (SIP) provided by an SIP server (16, 24), is established from and/or to a communication terminal (10, 12),
- wherein, initiated by the communication terminal (10, 12), a function address in the form of an SIP protocol element for calling up at least one function of the SIP server (16, 24) that can be assigned to the respective communication connection and is at least temporarily available is generated dynamically,
- wherein the SIP protocol element serves as the target address for an SIP message to the SIP server (16, 24) for calling up the function, and
- wherein the SIP protocol element is generated dynamically by a gateway (20, 22) that is providing the respective function,
• wherein the communication terminal being called in the respective communication connection (B, 12) calls up the respective function of the gateway (20, 22),
• wherein the communication connection is established via the gateway (20, 22) that generates the function address, wherein the function address generated at the gateway comprises the gateway address and/or an identifier for the communication connection to be established, and
• wherein the temporarily generated SIP protocol element is sent as a Malicious Call Identification "MCID" call-up from the communication terminal (B, 12) being called to the gateway (20, 22) for calling up the respective function.

2. The method according to Claim 1, wherein the SIP protocol element is configured as a Session Initiation Protocol Universal Resource Identifier (SIP URI).

3. The method according to either of the preceding claims, wherein the function address is integrated into an INVITE or response message.

4. The method according to any one of the preceding claims, wherein the function is called up by means of the function address at a point in time that lies within a period that includes the duration of the established communication connection and an additional period after termination of the established communication connection.

5. The method according to any one of the preceding claims, wherein the dynamically generated function address is deleted after a specified event, in particular after the function is called up and/or after the end of a certain period.

6. A computer program product for implementing the method according to any one of Claims 1 to 5.

7. A communication terminal (A, 10, B, 12) configured to establish a communication connection, initiated and controlled by the Session Initiation Protocol (SIP) provided by an SIP server (16, 24), from and/or to the communication terminal (A, 10, B, 12),
- wherein the communication terminal (A, 10, B, 12) is further configured to generate a function address for calling up at least one function of the SIP server (16, 24) that can be assigned to the respective communication connection and is at least temporarily available,
- wherein the function address is dynamically generated in the form of an SIP protocol element that serves as the target address of an SIP message to the SIP server (16, 24) for calling up the function, and
- wherein the SIP protocol element is generated dynamically by a gateway (20, 22) that is providing the respective function,
• wherein the communication terminal acting as the communication terminal being called in the communication connection (B, 12) is configured to call up the respective function of the gateway (20, 22),
• wherein the communication connection is established via the gateway (20, 22) that generates the function address, wherein the function address generated at the gateway comprises the gateway address and/or an identifier for the communication connection to be established, and
• wherein the communication terminal acting as the communication terminal being called is also configured to send the temporarily generated SIP protocol element as a Malicious Call Identification (MCID) call-up (B, 12) for calling up the respective function to the gateway (20, 22).

8. The communication terminal (A, 10, B, 12) according to Claim 7, wherein the communication terminal is further configured such that the SIP protocol element is configured as a Session Initiation Protocol Universal Resource Identifier (SIP-URI).

## Revendications

1. Procédé de télécommunication,
- dans lequel une liaison de communication lancée et contrôlée au moyen du protocole d'ouverture de session, SIP, fourni par un serveur SIP (16, 24) est établie depuis et/ou vers un terminal de communication (10, 12),
- dans lequel, déclenchée par le terminal de communication (10, 12), une adresse de fonction pour l'appel d'au moins une fonction du serveur SIP (16, 24), disponible au moins temporairement, attribuable à la liaison de communication respective, est générée dynamiquement sous forme d'un élément de protocole SIP,
- dans lequel l'élément de protocole SIP sert d'adresse cible d'un message SIP au serveur SIP (16, 24) pour l'appel de la fonction et
- dans lequel la génération dynamique de l'élément de protocole SIP est effectuée par une passerelle (20, 22) qui propose la fonction respective,
• dans lequel le terminal de communication appelé de la liaison de communication respective (B, 12) appelle la fonction respective de la passerelle (20, 22),
• dans lequel la liaison de communication est établie par le biais de la passerelle (20, 22), laquelle génère l'adresse de fonction, dans lequel l'adresse de fonction générée au niveau de la passerelle comporte l'adresse de la passerelle et/ou un identifiant pour la liaison de communication à établir, et
• dans lequel l'élément de protocole SIP généré temporairement est envoyé à la passerelle (20, 22) en tant qu'appel d'identification d'appel malveillant « MCID » par le terminal de communication appelé (B, 12) pour l'appel de la fonction respective.

2. Procédé selon la revendication 1, dans lequel l'élément de protocole SIP est formé en tant qu'identificateur universel de ressource de protocole d'ouverture de session, SIP-URI.

3. Procédé selon l'une quelconque des revendications précédentes, dans lequel l'adresse de fonction est intégrée dans un message d'INVITE ou de réponse.

4. Procédé selon l'une quelconque des revendications précédentes, dans lequel la fonction est appelée par l'adresse de fonction à un instant qui tombe dans un intervalle de temps qui comporte la durée de la liaison de communication établie et un autre intervalle de temps après l'arrêt de la liaison de communication établie.

5. Procédé selon l'une quelconque des revendications précédentes, dans lequel l'adresse de fonction dynamiquement générée est supprimée après un événement prédéfini, en particulier après l'appel de la fonction et/ou après l'expiration d'un certain intervalle de temps.

6. Produit de programme d'ordinateur pour l'exécution du procédé selon l'une des revendications 1 à 5.

7. Terminal de communication (A, 10, B, 12), qui est conçu pour établir une liaison de communication lancée et contrôlée au moyen du protocole d'ouverture de session, SIP, fourni par un serveur SIP (16, 24) depuis et/ou vers le terminal de communication (A, 10, B, 12),
- dans lequel le terminal de communication (A, 10, B, 12) est en outre conçu pour déclencher une adresse de fonction pour l'appel d'au moins une fonction du serveur SIP (16, 24) disponible au moins temporairement, attribuable à la liaison de communication respective
- dans lequel l'adresse de fonction est générée dynamiquement sous forme d'un élément de protocole SIP qui sert d'adresse cible d'un message SIP au serveur SIP (16, 24) pour l'appel de la fonction et
- dans lequel la génération dynamique de l'élément de protocole SIP est effectuée par une passerelle (20, 22) qui propose la fonction respective,
• dans lequel le terminal de communication en tant que terminal de communication appelé de la liaison de communication (B, 12) est conçu pour appeler la fonction respective de la passerelle (20, 22),
• dans lequel la liaison de communication est établie par le biais de la passerelle (20, 22) qui génère l'adresse de fonction, dans lequel l'adresse de fonction générée au niveau de la passerelle comporte l'adresse de la passerelle et/ou un identifiant pour la liaison de communication à établir, et
• dans lequel le terminal de communication en tant que terminal de communication appelé est en plus conçu pour envoyer, à la passerelle (20, 22), l'élément de protocole SIP généré temporairement en tant qu'appel d'identification d'appel malveillant « MCID » (B, 12) pour l'appel de la fonction respective.

8. Terminal de communication (A, 10, B, 12) selon la revendication 7, que le terminal de communication est en outre conçu que l'élément de protocole SIP est formé en tant qu'identificateur universel de ressource de protocole d'ouverture de session, SIP-URI.
